# EUROPÄISCHE PATENTSCHRIFT

(11) **EP 2 431 945 B1**
(45) Veröffentlichungstag und Bekanntmachung des Hinweises auf die Patenterteilung: **20.03.2013**
(21) Anmeldenummer: 10450147.3
(22) Anmeldetag: 17.09.2010
(51) Int. Cl.: G07B 15/06

(54) **Verfahren und Fahrzeuggerät zur Funkkommunikation in einem Strassenmautsystem**
Method and on-vehicle device for radio communication in a road toll system
Procédé et appareil de véhicule pour la communication radio dans un système de péage routier

(43) Veröffentlichungstag der Anmeldung: 21.03.2012
(73) Patentinhaber: Kapsch TrafficCom AG, 1120 Wien (AT)
(72) Erfinder: Hanisch, Harald, 1220 Wien (AT); Tijink, Jasja, 2384 Breitenfurt (AT); Winkler, Josef, 2500 Baden (AT)
(74) Vertreter: Weiser, Andreas

(56) Entgegenhaltungen:
- EP-A2- 0 767 446
- EP-A2- 1 768 070
- DE-A1- 10 258 653
- DE-A1- 19 605 654
- US-A1- 2003 109 223
- "GSS Global Specification for Short Range Communication"[Online] 23. August 2007 (2007-08-23), Seiten 7PP, 1-59, XP002622281 The platformforInteroperableElectronic Toll Collectionand Access Control Gefunden im Internet: URL:http://profesores.elo.utfsm.cl/~agv/el o326/1s06/ETC/GSS_32.pdf> [gefunden am 2011-02-14]

## Beschreibung

Die vorliegende Erfindung betrifft ein Verfahren zur Funkkommunikation zwischen einer Funkbake und einem Fahrzeuggerät mit einem Sendeempfänger im Rahmen eines Straßenmautsystems, wobei die Funkbake einen begrenzten Funkabdeckungsbereich und das Fahrzeuggerät zwei Betriebszustände hat, u.zw. einen ersten energiezehrenden Arbeitsmodus und einen zweiten energiesparenden Ruhemodus, und durch ein von der Funkbake empfangenes Signal aus dem Ruhemodus in den Arbeitsmodus versetzbar ist, sowie ein derartiges Fahrzeuggerät.

Um die Vermautung für eine immer steigende Anzahl von Fahrzeugen auf den Straßen möglichst effizient zu gestalten, werden in zunehmendem Maße vollautomatisierte Straßenmautsysteme verwendet, welche in ihrer Funktionsweise auf Funkkommunikationen zwischen straßenseitigen Funkbaken (Roadside Equipment, RSE) und mobilen Fahrzeuggeräten (Onboard Units, OBUs) beruhen.

Um Fahrzeuge auf die unmittelbare Umgebung einer Funkbake lokalisieren zu können, haben diese stets nur einen begrenzten Funkabdeckungsbereich, in dem Funkkommunikationen mit den OBUs der passierenden Fahrzeuge stattfinden können. Die Größe des Funkabdeckungsbereichs und die Geschwindigkeit des Fahrzeugs bei der Durchfahrt desselben definieren die für die Funkkommunikation zur Verfügung stehende Zeitspanne; für bestimmte Funkkommunikationen, z.B. Mauttransaktionen, die eine vorgegebene Mindestzeit zur Abwicklung benötigen, begrenzt dies umgekehrt die Fahrzeuggeschwindigkeit, bis zu der eine ordnungsgemäße Kommunikation mit den OBUs möglich ist.

Dieses Problem verstärkt sich noch bei der Verwendung von OBUs, die zur Energieeinsparung - wenn sie nicht senden - in einen energiesparenden Ruhemodus verfallen, aus dem sie erst beim Eintritt in den Funkabdeckungsbereich einer Bake durch ein Abfrage- bzw. Wecksignal der Bake "aufgeweckt", d.h. in den Arbeitsmodus umgeschaltet werden. Das Umschalten bzw. Aufwecken erfordert zusätzliche Zeit, welche die für die Funkkommunikation zur Verfügung stehende Zeitspanne weiter beschneidet und damit die Höchstgeschwindigkeit der mit dem Mautsystem verarbeitbaren Fahrzeuge weiter reduziert. Bekannte Funkkommunikationsverfahren und -geräte dieser Art sind daher nur für relativ langsame Fahrzeuge wie Lastkraftwagen bzw. LKWs (Heavy Goods Vehicles, HGV) geeignet und versagen bei sehr schnellen Fahrzeugen wie PKWs (Standard Passenger Cars, SPC).

Eine bekannte Lösung für die Erweiterung eines solchen Straßenmautsystems für schnell fahrende Fahrzeuge besteht darin, eine zusätzliche Funkbake als "Weckbake" in Fahrtrichtung vor der für die Funkkommunikation vorgesehenen Funkbake, der "Kommunikationsbake", aufzustellen. Die Weckbake sendet ein Wecksignal an die OBU, so daß diese bereits im Arbeitsmodus in das Funkabdeckungsbereich der Kommunikationsbake einfährt. Auf diese Weise entfällt das genannte Problem der Aufweckzeit. Der Nachteil dieser Lösung ist jedoch die beträchtliche Kostenerhöhung für den Betreiber des Straßenmautsystems, welche durch die Aufstellung von zusätzlichen Weckbaken verursacht wird.

Dokument EP0767446 offenbart ein Verfahren zur Funkkommunikation zwischen einer Funkbake und einem Fahrzeuggerät mit einem Sendeempfänger im Rahmen eines Straßenmautsystems, wobei das Fahrzeuggerät als Antwortsignal auf eine erste Anfrage der Funkbake eine Information sendet, anhand derer die verbleibende Kommunikationszeit beurteilt wird. Ein Arbeits- oder Ruhemodus des Fahrzeuggeräts wird dabei nicht berücksichtig.

Die Erfindung setzt sich zum Ziel, ein kostengünstiges und für alle Arten von Fahrzeugen einsetzbares Straßenmautsystem zu schaffen, welches die oben genannten Nachteile des Standes der Technik überwindet.

Dieses Ziel wird in einem ersten Aspekt der Erfindung mit einem Verfahren der eingangs genannten Art erreicht, welches sich gemäß der Erfindung durch die folgenden Schritte auszeichnet:
Empfangen eines Signals im Fahrzeuggerät und dadurch Versetzen des Fahrzeuggeräts in den Arbeitsmodus, wenn dieses sich zuvor im Ruhemodus befand, innerhalb einer Weckzeit;
Senden eines Antwortsignals, welches eine Information über den Betriebszustand des Fahrzeuggeräts vor dem Empfang des genannten Signals enthält, vom Fahrzeuggerät an die Funkbake;
Empfangen des Antwortsignals mit der genannten Betriebszustandsinformation in der Funkbake und Auswählen durch die Funkbake aufgrund der empfangenen Betriebszustandsinformation, ob der verbleibende Teil der Funkkommunikation mit einer längeren oder kürzeren Dauer mit dem Fahrzeuggerät durchzuführen ist; und
Durchführen des verbliebenen Teils der Funkkommunikation mit der ausgewählten Dauer.

Durch das erfindungsgemäße Verfahren erübrigt sich die Notwendigkeit, eine gesonderte Weckbake für OBUs von schnell fahrenden Fahrzeugen aufzustellen, weil die Funkbake erstmals in der Lage ist, die Funkkommunikation mit jeweils der optimalen, die allfällige Aufweck- bzw. Reaktionszeit der OBU berücksichtigenden Dauer durchzuführen. Dadurch ist gewährleistet, daß jeweils ein Austausch der für den erwünschten Kommunikationsvorgang erforderlichen Datenpakete zwischen der Funkbake und der OBU des passierenden Fahrzeuges stattfinden kann, unabhängig von dessen Fahrtgeschwindigkeit.

Insbesondere wird dazu in dem Fall, daß die Betriebszustandsinformation angibt, daß sich das Fahrzeuggerät zuvor im Ruhemodus befand, die kürzere Dauer ausgewählt, und in jenem Fall, daß die Betriebszustandsinformation angibt, daß sich das Fahrzeuggerät zuvor im Arbeitsmodus befand, die längere Dauer ausgewählt. Die Erfindung ermöglicht es der Funkbake, mit der OBU eines fahrenden Fahrzeuges den notwendigen Austausch von Datenpaketen bis zu deren Verlassen des Funkabdeckungsbereichs sicher abzuschließen.

Gemäß einem bevorzugten Merkmal der Erfindung enthält das Antwortsignal auch eine Information, die von der Dauer der abgelaufenen Weckzeit abhängt, wobei in der Funkbake die Dauer des verbliebenen Teils abhängig von der empfangenen Weckzeitinformation gewählt wird. Dadurch ist gewährleistet, dass immer die richtige Funkkommunikationszeit ausgewählt wird, insbesondere wenn die Angabe des Betriebszustands fehlerhaft bzw. fehlend war.

Eine besonders vorteilhafte Variante dieser Ausführungsform besteht darin, daß die genannte Information gleich einer durchschnittlichen Dauer der Funkkommunikation abzüglich der Weckzeit ist. Dadurch erhält die Funkbake die Information über die Dauer des verbliebenen Teils der Funkkommunikation direkt von der OBU und muss diese Dauer nicht intern berechnen.

In einer bevorzugten Ausführungsform der Erfindung wird die durchschnittliche Dauer der Funkkommunikation vom Fahrzeuggerät aus einer gemittelten Summe von über mehrere frühere Funkkommunikationen gespeicherten Weckzeiten und den Dauern der jeweils verbliebenen Teile der Funkkommunikationen berechnet. Damit kann das Fahrzeuggerät die Dauer der gesamten anstehenden Funkkommunikation schätzen und diese an die Funkbake senden.

Alternativ kann die genannte Weckzeitinformation auch gleich der Weckzeit sein, in welchem Fall die Funkbake dann aufgrund dieser Information die Dauer des verbliebenen Teils der Funkkommunikation prognostiziert.

In einer besonders bevorzugten Ausgestaltung dieser Variante mißt die Funkbake die Geschwindigkeit eines den Funkabdeckungsbereich passierenden Fahrzeuggerätes; und
die durchschnittliche Dauer der Funkkommunikation wird von der Funkbake näherungsweise aus der gemessenen Geschwindigkeit und der vorbekannten Länge des Funkabdeckungsbereichs berechnet. Dadurch kann die Funkbake die Dauer der gesamten Funkkommunikation mit erhöhter Genauigkeit prognostizieren.

Besonders günstig ist es, wenn das Fahrzeuggerät die genannte Betriebszustandsinformation mit der optionalen Weckzeitinformation am Beginn der Funkkommunikation als erste Antwort auf das genannte Signal sendet. Damit gewinnt die Funkbake mehr Zeit, um den ausgewählten Kommunikationsvorgang durchzuführen.

Bevorzugt erfolgt die Funkkommunikation zwischen der Funkbake und dem Sendeempfänger nach dem DSRC-Standard, wobei die genannte Betriebszustandsinformation mit der optionalen Weckzeitinformation in Form einer Vehicle-Service-Table-Nachricht des DSRC-Standards gesendet wird. Der DSRC-Standard (dedicated short range communication standard) ist bei Mautsystemen mit Kurzreichweiten-Funkbaken weit verbreitet und kann daher in vorteilhafter Weise für die Zwecke der Erfindung ausgenützt werden, indem die "Vehicle Service Table" Nachricht (VST) des Standards, mit der sich OBUs bei der ersten Kontaktaufnahme bei einer Funkbake melden, zur Übertragung der genannten Betriebszustandsinformation verwendet wird.

Alternativ dazu kann die Funkkommunikation zwischen der Funkbake und dem Sendeempfänger nach dem WAVE-Standard IEEE 1609.11 erfolgen, sodaß der Sendeempfänger aus den nach diesem Standard angebotenen Diensten, z.B. Internetzugang oder Aufbau von Vehicle-ad-hoc-Networks (VANETs), Nutzen ziehen kann.

Zweckmäßigerweise wird die durchgeführte Funkkommunikation zur Vermautung von Fahrzeugen verwendet. Damit können Fahrzeuge unabhängig von ihrer Geschwindigkeit vermautet werden, ohne daß der Verkehrsfluß beeinträchtigt wird.

Gemäß einer weiteren vorteilhaften Ausführungsform der Erfindung werden im Zuge der Funkkommunikation verkehrsrelevante Informationen wie Kennzeichen des Fahrzeugs, Mauttarife, Mautkarten od.dgl. in Form von Datenpaketen zwischen der Funkbake und dem Fahrzeuggerät ausgetauscht. Dadurch kann der Fahrer des Fahrzeugs verkehrsrelevante Informationen "on the fly" von einer Funkbake erhalten oder an diese absetzen.

In der Regel werden die Funkbaken ortsfest an Straßenabschnitten montiert sein. Optional können bei dem Verfahren der Erfindung Funkbaken auch von einem beweglichen Träger, z.B. einem Kontrollfahrzeug, mitgeführt werden. Aufgrund der Eignung des erfindungsgemäßen Verfahrens für hohe Relativgeschwindigkeiten zwischen Funkbake und OBU können damit Kontrollfahrzeuge sogar mit OBUs des Gegenverkehrs auf der Gegenfahrbahn sicher kommunizieren .

In einem zweiten Aspekt erreicht die Erfindung ihre Ziele mit einem Fahrzeuggerät, welches einen Sendeempfänger zur Funkkommunikation mit Funkbaken eines Straßenmautsystems aufweist, wobei das Fahrzeuggerät zwei Betriebszustände hat, u.zw. einen ersten energiezehrenden Arbeitsmodus und einen zweiten energiesparenden Ruhemodus, und durch ein von einer Funkbake empfangenes Signal innerhalb einer Weckzeit aus dem Ruhemodus in den Arbeitsmodus versetzbar ist und dafür ausgebildet ist, im Rahmen einer Funkkommunikation mit einer Funkbake zumindest eine Information über seinen dem Empfang des genannten Signals vorangegangenen Betriebszustand an die Funkbake zu senden, wobei das Fahrzeuggerät befähigt ist, die genannte Weckzeit zu messen und eine davon abhängige Information an die Funkbake zu senden. Hinsichtlich der Vorteile des erfindungsgemäßen Fahrzeuggeräts wird auf die obigen Ausführungen zum Verfahren verwiesen.

In einer bevorzugten Ausführungsform der Erfindung ist die genannte Weckzeitinformation gleich einer durchschnittlichen Dauer der Funkkommunikation abzüglich der Weckzeit.

In einer vorteilhaften Ausgestaltung der Erfindung ist das Fahrzeuggerät dafür ausgebildet, die Weckzeiten und die Dauern der jeweils verbliebenen Teile früherer Funkkommunikation abzuspeichern und aus diesen gespeicherten Werten die genannte durchschnittliche Dauer zu mitteln.

Alternativ kann die genannte Weckzeitinformation auch gleich der Weckzeit sein.

In einer besonders bevorzugten Ausgestaltung der Erfindung ist vorgesehen, daß das Fahrzeuggerät die genannte Betriebszustandsinformation mit der genannten Weckzeitinformation am Beginn der Funkkommunikation als erste Antwort auf das genannte Signal sendet.

Besonders günstig ist es, wenn der Sendeempfänger ein DSRC-Sendeempfänger und dafür ausgebildet ist, die genannte Betriebszustandsinformation mit der genannten Weckzeitinformation in einer Vehicle-Service-Table-Nachricht nach dem DSRC-Standard zu senden.

Alternativ dazu kann der Sendeempfänger ein WAVE-Sendeempfänger nach dem Standard IEEE 1609.11 sein.

Gemäß einem weiteren bevorzugten Merkmal der Erfindung kann das Fahrzeuggerät dafür ausgebildet sein, im Zuge der Funkkommunikation verkehrsrelevante Informationen wie Kennzeichen des Fahrzeugs, Mauttarife, Mautkarten od.dgl. in Form von Datenpaketen zwischen der Funkbake und dem Fahrzeuggerät auszutauschen.

Die Erfindung wird nachstehend anhand von in den beigeschlossenen Zeichnungen dargestellten Ausführungsbeispielen näher erläutert. In den Zeichnungen zeigen:
Fig. 1 einen Ausschnitt eines beispielhaften Straßenmautsystems mit einer Funkbake und einem Fahrzeuggerät der Erfindung in einer schematischen Draufsicht;
Fig. 2 ein Überblicksdiagramm der Funkkommunikation zwischen der Funkbake und dem Fahrzeuggerät von Fig. 1;
die Fig. 3a und 3b jeweils ein Sequenzdiagramm der Funkkommunikation von Fig. 2 in zwei verschiedenen Entscheidungsästen des Verfahrens der Erfindung;
Fig. 4 ein Flußdiagramm des in der Funkbake der Fig. 1 - 3 ablaufenden Teils des erfindungsgemäßen Verfahrens;
Fig. 5 einen Ausschnitt eines beispielhaften Straßenmautsystems analog Fig. 1 in dem Stadium des in Fig. 3b dargestellten Entscheidungsasts; und
Fig. 6 ein Sequenzdiagramm der Funkkommunikation von Fig. 2 in einer alternativen Ausführungsform des Verfahrens der Erfindung.

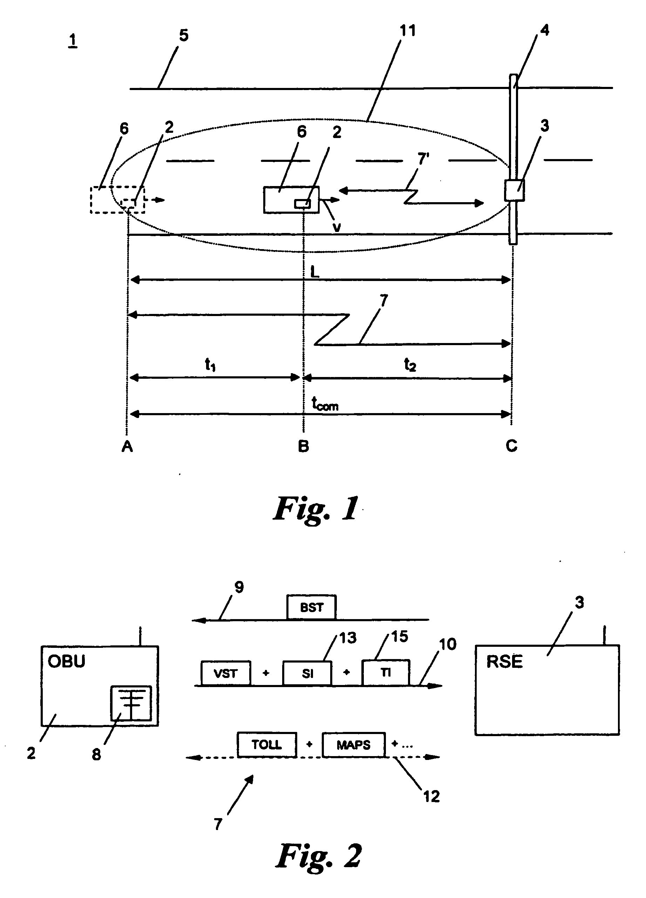

Gemäß den Fig. 1 und 2 umfaßt ein Straßenmautsystem 1 eine Vielzahl von Fahrzeuggeräten (Onboard Units, OBUs) 2 und Funkbaken (Roadside Equipment, RSE) 3, von denen stellvertretend nur eine OBU 2 und eine Funkbake 3 beispielhaft gezeigt sind. Die Funkbake 3 ist z.B. auf einer Brücke 4 montiert, die eine Fahrbahn 5 überspannt, auf welcher sich ein beispielhaftes Fahrzeug 6 bewegt, das die OBU 2 mitführt.

Die Funkbake 3 führt bei der Passage eines Fahrzeugs 6 eine Funkkommunikation 7 mit der OBU 2 desselben durch, genauer mit einem Sendeempfänger 8 der OBU 2. Die Funkkommunikation 7 erfolgt bevorzugt nach einem etablierten Kurzreichweitenfunk-Standard, z.B. nach dem DSRC-Standard (Dedicated Short Range Communication), insbesondere nach dem Standard ISO 14906 oder EN 15509 oder darauf aufbauenden oder damit kompatiblen Standards. Nach dem DSRC-Standard sendet beispielsweise die Funkbake 3 am Beginn der Funkkommunikation 7 eine Baken-Dienstübersicht-Nachricht (Beacon Service Table, BST) 9 an die OBU 2 und diese antwortet mit einer OBU-Dienstübersicht-Nachricht (Vehicle Service Table, VST) 10 (Fig. 2).

Anstelle nach dem DSRC-Standard könnte die Funkkommunikation 7 auch nach dem WAVE-Standard IEEE 1609.11 erfolgen, was dem Fahrzeuggerät 2 z.B. das Nutzen eines Internetzugangs oder den Aufbau von Vehicle-ad-hoc-Networks (VANETs) ermöglicht.

Jede Funkbake 3 strahlt ihre Funksignale (bzw. empfängt diese) über einen begrenzten Funkabdeckungsbereich 11 aus, sodaß Funkkommunikationen 7 nur in diesem Funkabdeckungsbereich 10 stattfinden können.

Für eine Funkkommunikation 7 mit einer passierenden OBU 2 muß diese gleichzeitig vollständig betriebsbereit sein; OBUs 2 der hier betrachteten Art verfallen jedoch zwischen Funkkommunikationen 7 mit den einzelnen Funkbaken 3 auf ihrem Weg in einen energiesparenden Ruhemodus ("Standby"-Modus) STBY. Im Ruhemodus STBY operiert eine OBU 2 nur mit eingeschränkter Funktionalität, d.h. sie ist lediglich in der Lage, ein von einer Funkbake 3 gesendetes Signal zu empfangen, z.B. die BST-Nachricht 9, welches sie "aufweckt" und in ihren normalen, d.h. nicht-energiesparenden ("energiezehrenden") Arbeitsmodus ON versetzt. Im Arbeitsmodus ON erreicht die OBU 2 ihre volle Funktionalität und ist befähigt, Signale zu senden und zu empfangen.

In Fig. 1 ist die OBU 2 mit dem Fahrzeug 6 in zwei verschiedene Positionen gezeigt. In der mit strichlierten Linien gezeigten Position A bei der Einfahrt des Fahrzeugs 6 in den Funkabdeckungsbereich 11 befindet sich die OBU 2 zumeist im Ruhemodus STBY und wird durch das erste im Funkabdeckungsbereich 11 empfangene Signal der Funkbake 3, z.B. die BST-Nachricht 9, "aufgeweckt" und in den Arbeitsmodus ON versetzt. Das Aufwecken benötigt stets eine gewisse Zeit, bis die OBU 2 voll funktionsfähig ist, hier "Weckzeit" t₁ genannt.

In der Weckzeit t₁ ist das Fahrzeug 6 mit der OBU 2 bis zu der mit ausgezogenen Linien gezeigten Position B vorgefahren. Erst ab der Zeit t₁ bzw. der Position B ist die OBU 2 in der Lage, eine bidirektionale Funkkommunikation 7 mit der Funkbake 3 durchzuführen. Im Zuge der Funkkommunikation 7 können dann weitere Datenpakete 12, welche zur Vermautung von Fahrzeugen 6 und/oder zum Austausch von verkehrsrelevanten Informationen dienen, zwischen Funkbake 3 und OBU 2 in beiden Richtungen übermittelt werden. Dieser Vorgang erstreckt sich über eine "Kommunikationszeit" t₂ bis maximal zum Zeitpunkt bzw. der Position C des Verlassens des Funkabdeckungsbereichs 11, wonach die OBU 2 wieder in den Ruhemodus STBY verfällt.

Das Problem mit der in Fig. 1 gezeigten Situation besteht darin, daß für schnell fahrende Fahrzeuge 6 die nach der Weckzeit t₁ verbleibende Kommunikationszeit t₂ für zeitaufwendigere Funkkommunikationen 7, z.B. den Download von Mautkarten, Tariftabellen usw., zu kurz sein kann. Es kann aber auch kurze Funkkommunikationen 7 geben, wie Statusmeldungen, Mautabbuchungsbefehle usw., für die die Kommunikationszeit t₂ durchaus ausreichen kann.

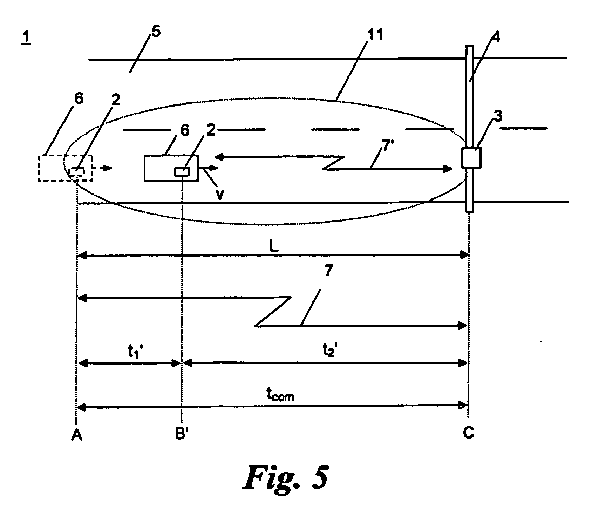

Anderseits wurde erkannt, daß es Situationen geben kann, in denen sich eine OBU 2 bei der Einfahrt in den Funkabdeckungsbereich 11 (Position A) gar nicht im Ruhemodus STBY befindet, sondern bereits (oder noch) im Arbeitsmodus ON ist, wodurch sich die Weckzeit t₁' erübrigt bzw. auf eine bloße - wesentlich kürzere - Reaktionszeit tᵣ reduziert. Diese Situation ist in Fig. 5 skizziert: Nach der Reaktionszeit t₁' - tᵣ befindet sich das Fahrzeug 6 mit der OBU 2 erst kurz nach dem Beginn des Funkabdeckungsbereichs 11 an der "Reaktionsposition" B', und die für die Funkkommunikation 7 verbleibende Zeit t₂' ist dementsprechend länger als in Fig. 1.

Um diesen unterschiedlichen Situationen jeweils optimal Rechnung zu tragen, wird das im Folgenden beschriebene Verfahren angewandt und die OBU 2 dazu wie folgt ausgebildet.

Wie in Fig. 2 im Überblick veranschaulicht, sendet jede OBU 2 im Rahmen einer Funkkommunikation 7 mit einer Funkbake 3 eine Betriebszustandsinformation (State Information, SI) 13, mit welcher sie der Funkbake 3 mitteilt, in welchem Betriebszustand - Arbeitsmodus ON oder Ruhemodus STBY - sie sich vor dem Beginn der Funkkommunikation 7, d.h. vor dem Empfang des ersten Signals 9 (z.B. der BST-Nachricht) befand. Anhand der von der OBU 2 erhaltenen Betriebszustandsinformation 13 kann die weitere Funkkommunikation 7 dann entsprechend der zu erwartenden Kommunikationszeit t₂ oder t₂' gestaltet und optimal an diese angepaßt werden.

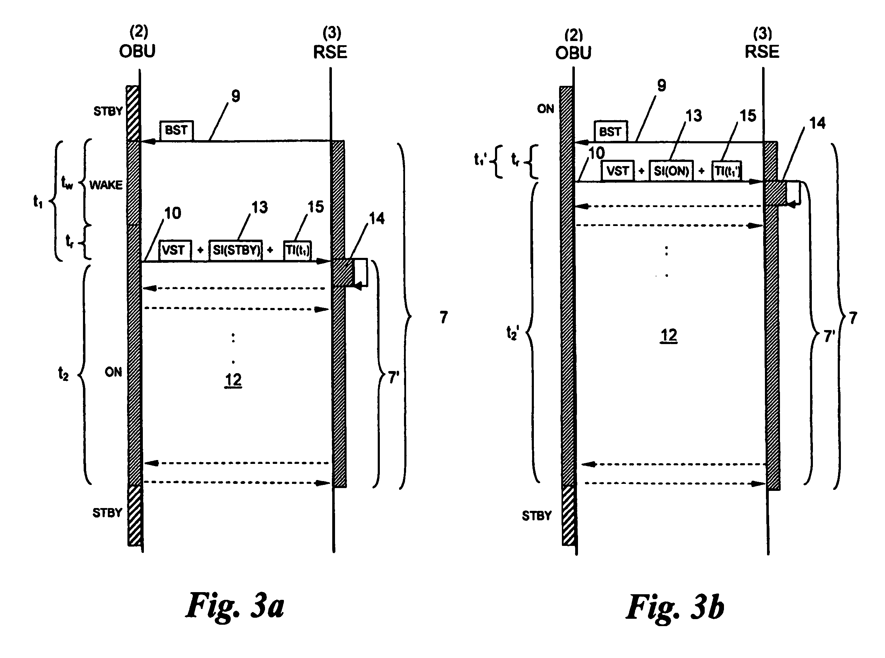

Die Fig. 3a und 3b zeigen dieses Verfahren im Detail. In dem Sequenzdiagramm von Fig. 3a, welches den Verfahrensablauf in der Situation von Fig. 1 beschreibt, befindet sich die OBU 2 zu Beginn der Funkkommunikation 7 mit der Funkbake 3 im Ruhemodus STBY. Der Empfang der BST-Nachricht 9 als erstes Signal beim Eintritt der OBU 2 in den Funkabdeckungsbereich 11 weckt diese auf ("WAKE") und versetzt sie in den Arbeitsmodus ON, woraufhin sie mit ihrer VST-Nachricht 10 antwortet. Bis zu dieser Antwort 10 verstreicht die Weckzeit t₁, welche sich aus der eigentlichen Aufweckzeit t_{w} für die Weckphase WAKE und einer Reaktionszeit tᵣ der OBU 2 im Arbeitsmodus ON zusammensetzt.

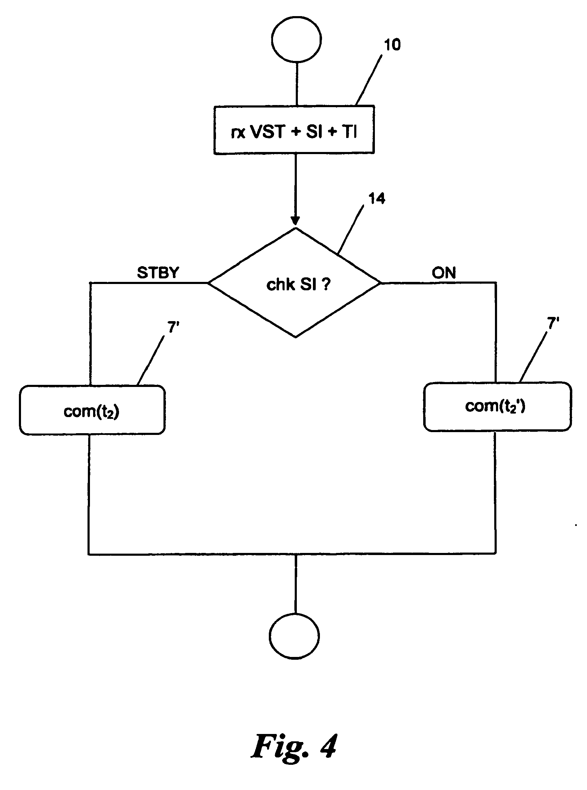

Gemeinsam mit der VST-Nachricht 10 sendet die OBU 2 die Information 13 über ihren Betriebszustand vor Empfang des Abfragesignals 9, hier die Information "STBY", an die Funkbake 3. Die Funkbake 3 wertet daraufhin die empfangene Betriebszustandsinformation 13 in einem Verarbeitungsschritt 14 aus, der in Fig. 4 ausführlicher gezeigt ist.

Gemäß Fig. 4 wird im Verarbeitungsschritt 14 in der Funkbake 3 abhängig von der erhaltenen Betriebszustandsinformation 13 ausgewählt bzw. entschieden, ob die weitere Funkkommunikation 7' mit einer kürzeren Dauer t₂ oder einer vergleichsweise längeren Dauer t₂' mit der OBU 2 durchzuführen ist: In dem Fall, daß die Betriebszustandsinformation 13 angibt, daß die OBU 2 sich zuvor im Ruhemodus STBY befand (Fig. 1 und 3a), wird die kürzere Dauer t₂ gewählt (linker Entscheidungsast von Fig. 4; Fig. 3a), und in jenem Fall, daß die Betriebszustandsinformation 13 angibt, daß sie sich im Arbeitsmodus ON befand (Fig. 5 und 3b), wird die längere Dauer t₂' gewählt (rechter Entscheidungsast von Fig. 4; Fig. 3b).

Der verbliebene Teil 7' der Funkkommunikation 7 wird anschließend mit der gewählten Dauer, in Fig. 3a ist das die kürzere Dauer t₂, durchgeführt, wobei die entsprechenden Datenpakete 12 ausgetauscht werden. Nach der Kommunikationszeit t₂ verfällt die OBU 2 wieder in den Ruhemodus STBY.

Fig. 3b zeigt den bereits angesprochenen, zu Fig. 3a alternativen Fall, in dem die OBU 2 vor dem Beginn der Funkkommunikation 7 mit der Funkbake 3 im Arbeitsmodus ON war. Da hier die Weckphase WAKE entfällt, ist t₁' gleich der Reaktionszeit tᵣ der betriebsbereiten OBU 2. In der Entscheidung 15 kann damit die längere Kommunikationsdauer t₂' gewählt und in der Folge ein größeres Datenvolumen 12 zwischen der OBU 2 und der Funkbake 3 ausgetauscht werden, z.B. Straßenkarten, Tariftabellen, Nachrichten usw. Nach der Kommunikationszeit t₂' verfällt auch hier die OBU 2 wieder in den Ruhemodus STBY.

Fig. 5 zeigt die verschiedenen Positionen der OBU 2 während des in Fig. 3b dargestellten Entscheidungsastes des Verfahrens im Rahmen des Straßenmautsystems 1. Die im Vergleich zu Fig. 1 längere Kommunikationszeit t₂' und damit längere Kommunikationsstrecke zwischen der Reaktionsposition B' und dem Ende des Funkabdeckungsbereichs 11 ist ersichtlich.

Wie in den Fig. 2 bis 4 gezeigt, kann gemäß einer optionalen Variante des Verfahrens die Weckzeit t₁, t₁' der OBU 2 von dieser selbst gemessen und der Funkbake 3 mitgeteilt werden, damit diese die weitere Funkkommunikation 7' noch genauer an die zur Verfügung stehende Zeit anpassen kann. Zu diesem Zweck sendet die OBU 2 im Zuge des Antwortsignals 10 eine Information 15, die von der Dauer der Weckzeit t₁, t₁' abhängt, im weiteren "Weckzeitinformation" (Time Information, TI) genannt, an die Funkbake 3.

Die Weckzeitinformation 15 kann z.B. direkt die gemessene Weckzeit t₁, t₁' sein. Alternativ kann die Weckzeitinformation 15 eine Schätzung der aufgrund der Weckzeit t₁, t₁' verbleibenden Kommunikationszeit t₂, t₂' sein, indem die OBU 2 die Weckzeit t₁, t₁' von einer durchschnittlichen Dauer t_{com} der Funkkommunikationen 7 abzieht. Die durchschnittliche Dauer term der Funkkommunikationen 7 kann die OBU 2 beispielsweise aus der über mehrere vergangene Kommunikationsvorgänge gemittelten Summe der Weckzeiten t₁, t₁' und Kommunikationszeiten t₂, t₂' bilden.

Die Funkbake 3 verarbeitet die von der OBU 2 empfangene Weckzeitinformation 15 im Verarbeitungsschritt 14 und prognostiziert anhand dieser die Kommunikationszeit t₂, t₂' des verbliebenen Teils 7' der Funkkommunikation 7. Wenn die Weckzeitinformation 15 bereits die von der OBU 2 berechnete Schätzung der Kommunikationszeit t₂, t₂' enthält, kann diese gleich direkt von der Funkbake 3 verwendet werden. Wenn die Weckzeitinformation 15 unmittelbar die Weckzeit t₁, t₁" enthält, berechnet die Funkbake 3 selbst die Schätzung (t₂, t₂' ) - t_{com} - (t₁, t₁') auf Grundlage einer von ihr selbst ermittelten durchschnittlichen Kommunikationszeit t_{com} aus vergangenen (früheren) Funkkommunikationen 7.

Alternativ dazu kann die Funkbake 3 die Geschwindigkeit v eines jeden den Funkabdeckungsbereich 11 passierenden Fahrzeugs 6 messen. Die Messung der Geschwindigkeit v durch die Funkbake 3 kann beim Eintritt des Fahrzeugs 6 in den Funkabdeckungsbereich 11 oder zu einem späteren Zeitpunkt erfolgen. Anhand dieser gemessenen Geschwindigkeitswerte v und einer festgelegten Länge L des Funkabdeckungsbereichs 11, welche der Funkbake 3 im Vorhinein bekannt ist und der vom Fahrzeug 6 zurückzulegenden Strecke ab dem Eintritt in den Funkabdeckungsbereich 11 bis zu dessen Verlassen in annähernder Weise entspricht, kann die Funkbake 3 die durchschnittliche Dauer term der Funkkommunikation 7 als t_{com}= v/L schätzungsweise berechnen bzw. prognostizieren und den verbliebenen Teil 7' der Funkkommunikation 7 an die so berechnete Dauer t_{com} angepasst durchführen.

Zum Schluss führt die Funkbake 3 aufgrund der im Verarbeitungsschritt 14 getroffenen Entscheidung die gewählte kürzere oder längere Kommunikation 7' mit der auf diese Weise prognostizierten Dauer t₂ bzw. t₂' durch.

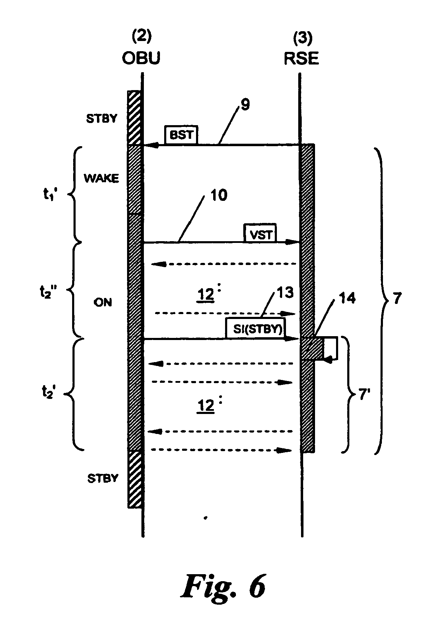

Fig. 6 zeigt eine Abwandlung des Verfahrens der Fig. 3a und 3b, hier nur für den Entscheidungsast von Fig. 3a dargestellt (der Ast von Fig. 3b ist analog modifiziert). Gleiche Bezugszeichen bezeichnen gleiche Elemente wie in den Fig. 3a und 3b, und im weiteren wird nur auf die Unterschiede zu Fig. 3a bzw. 3b eingegangen.

In Fig. 6 sendet die OBU 2 die Information 13 über ihren Betriebszustand (STBY oder ON) nicht gleich zu Beginn der Funkkommunikation 7 an die Funkbake 3, sondern erst später im Verlauf der Funkkommunikation 7 nach dem Austausch einiger erster Datenpakete 12 während einer ersten Kommunikationsdauer t₂"-Der daraufhin verbliebene Teil 7' der Funkkommunikation 7 wird wieder mit der in Schritt 15 bestimmten Dauer t₂ (bzw. t₂') durchgeführt. Nach dem Beenden der Funkkommunikation 7 verfällt die OBU 2 wieder in den Ruhemodus STBY. Wie dargestellt sendet die OBU 2 hier keine Information 15 über ihre Weckzeit t₁, t₁' an die Funkbake 3, obwohl dies selbstverständlich auch bei dieser Variante des Verfahrens optional möglich ist.

Die Erfindung ist demgemäß nicht auf die dargestellten Ausführungsformen beschränkt, sondern umfaßt alle Varianten, Kombinationen und Modifikationen, die in den Rahmen der angeschlossenen Ansprüche fallen.

## Patentansprüche

1. Verfahren zur Funkkommunikation (7) zwischen einer Funkbake (3) und einem Fahrzeuggerät (2) mit einem Sendeempfänger (8) im Rahmen eines Straßenmautsystems (1), wobei die Funkbake (3) einen begrenzten Funkabdeckungsbereich (11) und das Fahrzeuggerät (2) zwei Betriebszustände hat, u.zw. einen ersten energiezehrenden Arbeitsmodus (ON) und einen zweiten energiesparenden Ruhemodus (STBY), und durch ein von der Funkbake (3) empfangenes Signal (9) aus dem Ruhemodus (STBY) in den Arbeitsmodus (ON) versetzbar ist, **gekennzeichnet durch** die Schritte:
Empfangen eines Signals (9) im Fahrzeuggerät (2) und **dadurch** Versetzen des Fahrzeuggeräts (2) in den Arbeitsmodus (ON), wenn dieses sich zuvor im Ruhemodus (STBY) befand, innerhalb einer Weckzeit (t₁, t₁');
Senden eines Antwortsignals (10), welches zumindest eine Information (13) über den Betriebszustand des Fahrzeuggeräts (2) vor dem Empfang des genannten Signals (9) enthält, vom Fahrzeuggerät (2) an die Funkbake (3);
Empfangen des Antwortsignals (10) mit der genannten Betriebszustandsinformation (13) in der Funkbake (3) und Auswählen **durch** die Funkbake (3) aufgrund der empfangenen Betriebszustandsinformation (13), ob der verbliebene Teil (7') der Funkkommunikation (7) mit einer längeren (t₂') oder kürzeren Dauer (t₂) mit dem Fahrzeuggerät (2) durchzuführen ist; und
Durchführen des verbliebenen Teils (7') der Funkkommunikation (7) mit der ausgewählten Dauer (t₂, t₂').

2. Verfahren nach Anspruch 1, **dadurch gekennzeichnet, daß** in dem Fall, daß die Betriebszustandsinformation (13) angibt, daß sich das Fahrzeuggerät (2) zuvor im Ruhemodus (STBY) befand, die kürzere Dauer (t₂) ausgewählt wird, und in jenem Fall, daß die Betriebszustandsinformation (13) angibt, daß sich das Fahrzeuggerät (2) zuvor im Arbeitsmodus (ON) befand, die längere Dauer (t₂') ausgewählt wird.

3. Verfahren nach Anspruch 1 oder 2, **dadurch gekennzeichnet, daß** das Antwortsignal (10) auch eine Information (15) enthält, die von der Dauer der Weckzeit (t₁, t₁') abhängt, damit die Funkbake (3) die Dauer (t₂, t₂') des verbliebenen Teils (7') der Funkkonmunikation (7) noch genauer an die zur Verfügung stehende Zeit anpassen kann.

4. Verfahren nach Anspruch 3, **dadurch gekennzeichnet, daß** die genannte Weckzeitinformation (15) gleich einer durchschnittlichen Dauer (t_{com}) der Funkkommunikation (7) abzüglich der Weckzeit (t₁, t₁') ist,
welche durchschnittliche Dauer (t_{com}) der Funkkommunikation (7) vom Fahrzeuggerät (2) aus einer gemittelten Summe von über mehrere frühere Funkkommunikationen (7) gespeicherten Weckzeiten (t₁, t₁') und den Dauern (t₂, t₂') der jeweils verbliebenen Teile (7') der Funkkommunikationen (7) berechnet wird.

5. Verfahren nach Anspruch 3, **dadurch gekennzeichnet, daß** die genannte Weckzeitinformation (15) gleich der Weckzeit (t₁, t₁') ist.

6. Verfahren nach Anspruch 5, **dadurch gekennzeichnet, daß** die Funkbake (3) die Geschwindigkeit (v) eines den Funkabdeckungsbereich (11) passierenden Fahrzeuggerätes (2) mißt, eine durchschnittliche Dauer (t_{com}) der Funkkoaununikation (7) näherungsweise aus der gemessenen Geschwindigkeit (v) und der vorbekannten Länge (L) des funkabdeckungsbereichs (11) berechnet, und den verbliebenen Teil (7') der Funkkonmunikation (7) an die so berechnete durchschnittliche Dauer (t_{com}) abzüglich der Weckzeitinformation (15) anpaßt.

7. Verfahren nach einem der Ansprüche 1 bis 6, **dadurch gekennzeichnet, daß** das Fahrzeuggerät (2) die genannte Betriebszustandsinformation (13) mit der optionalen Weckzeitinformation (15) am Beginn der Funkkommunikation (7) als erste Antwort (10) auf das genannte Signal (9) sendet.

8. Verfahren nach Anspruch 7, **dadurch gekennzeichnet, daß** die Funkkommunikation (7) zwischen der Funkbake (3) und dem Sendeempfänger (8) nach dem DSRC-Standard erfolgt, wobei die genannte Betriebszustandsinformation (13) mit der optionalen Weckzeitinformation (15) in Form einer Vehicle-Service-Table-Nachricht des DSRC-Standards gesendet wird.

9. Verfahren nach Anspruch 7, **dadurch gekennzeichnet, daß** die Funkkomnunikation (7) zwischen der Funkbake (3) und dem Sendeempfänger (8) nach dem WAVE-Standard IEEE 1609.11 erfolgt.

10. Verfahren nach einem der Ansprüche 1 bis 9, **dadurch gekennzeichnet, daß** im Zuge der Funkkommunikation (7) verkehrsrelevante Informationen wie Kennzeichen des Fahrzeugs (6), Mauttarife (TOLL) oder Mautkarten (MAPS) in Form von Datenpaketen zwischen der Funkbake (3) und dem Fahrzeuggerät (2) ausgetauscht werden.

11. Verfahren nach einem der Ansprüche 1 bis 10, **dadurch gekennzeichnet, daß** die Funkbake (3) von einem beweglichen Träger, bevorzugt einem Kontrollfahrzeug, mitgeführt wird.

12. Fahrzeuggerät (2) mit einem Sendeempfänger (8) zur Funkkommunikation (7) mit Funkbaken (3) eines Straßenmautsystems (1), wobei das Fahrzeuggerät (2) zwei Betriebszustände hat, u. zw. einen ersten energiezehrenden Arbeitsmodus (ON) und einen zweiten energiesparenden Ruhemodus (STBY), und durch ein von einer Funkbake (3) empfangenes Signal (9) innerhalb einer Weckzeit (t₁, t₁') aus dem Ruhemodus (STBY) in den Arbeitsmodus (ON) versetzbar ist, **dadurch gekennzeichnet, daß** das Fahrzeuggerät (2) dafür ausgebildet ist, im Rahmen einer Funkkommunikation (7) mit einer Funkbake (3) zumindest eine Information (13) über seinen dem Empfang des genannten Signals (9) vorangegangenen Betriebszustand (STBY, ON) an die Funkbake (3) zu senden, wobei das Fahrzeuggerät (2) befähigt ist, die genannte Weckzeit (t₁, t₁') zu messen und eine davon abhängige Information (15) an die Funkbake (3) zu senden.

13. Fahrzeuggerät nach Anspruch 12, **dadurch gekennzeichnet, daß** die genannte Weckzeitinformation (15) gleich einer durchschnittlichen Dauer (t_{com}) der Funkkommunikation (7) abzüglich der Weckzeit (t₁, t₁') ist, wobei das Fahrzeuggerät (2) dafür ausgebildet ist, die Weckzeiten (t₁, t₁') und die Dauern (t₂, t₂') der jeweils verbliebenen Teile (7') früherer Funkkommunikationen (7) abzuspeichern und aus diesen gespeicherten Werten die genannte durchschnittliche Dauer (t_{com}) zu mitteln.

14. Fahrzeuggerät nach Anspruch 12, **dadurch gekennzeichnet, daß** die genannte Weckzeitinformation (15) gleich der Weckzeit (t₁, t₁') ist.

15. Fahrzeuggerät nach einem der Ansprüche 12 bis 14, **dadurch gekennzeichnet, daß** das Fahrzeuggerät (2) die genannte Betriebszustandsinformation (13) mit der genannten Weckzeitinformation (15) am Beginn der Funkkommunikation (7) als erste Antwort (10) auf das genannte Signal (9) sendet.

16. Fahrzeuggerät nach Anspruch 15, **dadurch gekennzeichnet, daß** der Sendeempfänger (8) ein DSRC-Sendeempfänger und dafür ausgebildet ist, die genannte Betriebszustandsinformation (13) mit der genannten Weckzeitinformation (15) in einer Vehicle-Service-Table-Nachricht nach dem DSRC-Standard zu senden.

17. Fahrzeuggerät nach Anspruch 15, **dadurch gekennzeichnet, daß** der Sendeempfänger (8) ein WAVE-Sendeempfänger nach dem Standard IEEE 1609.11 ist.

18. Fahrzeuggerät nach einem der Ansprüche 12 bis 17, **dadurch gekennzeichnet, daß** es dafür ausgebildet ist, im Zuge der Funkkommunikation (7) verkehrsrelevante Informationen wie Kennzeichen des Fahrzeugs (6), Mauttarife (TOLL) oder Mautkarten (MAPS) in Form von Datenpaketen zwischen der Funkbake (3) und dem Fahrzeuggerät (2) auszutauschen.

## Claims

1. Method for radio communication (7) between a radio beacon (3) and an onboard unit (2) with a transceiver (8) as part of a road toll system (1), wherein the radio beacon (3) has a limited radio coverage area (11) and the onboard unit (2) has two operating modes, i.e. a first energy-consuming working mode (ON) and a second energy-saving resting mode (STBY), and can be changed from the resting mode (STBY) to the working mode (ON) by a signal (9) received from the radio beacon (3), **characterised by** the steps:
receiving a signal (9) in the onboard unit (2) and as a result changing the onboard unit (2) to the working mode (ON), if this was previously in the resting mode (STBY), within a prompt time (t₁, t₁');
transmitting a response signal (10), which contains at least one information (13) concerning the operating mode of the onboard unit (2) before receipt of the said signal (9), from the onboard unit (2) to the radio beacon (3);
receiving the response signal (10) with said operating mode information (13) in the radio beacon (3) and on the basis of the received operating mode information (13) selecting by means of the radio beacon (3) whether the remaining part (7') of the radio communication (7) is to be conducted with the onboard unit (2) for a longer (t₂') or shorter duration (t₂); and
conducting the remaining part (7') of the radio communication (7) for the selected duration (t₂, t₂').

2. Method according to claim 1, **characterised in that** the shorter duration (t₂) is selected in the case where the operating mode information (13) specifies that the onboard unit (2) was previously in the resting mode (STBY) and the longer duration (t₂') is selected in the case where the operating mode information (13) specifies that the onboard unit (2) was previously in the working mode (ON).

3. Method according to claim 1 or 2, **characterised in that** the response signal (10) also contains an information (15) which is dependent on the duration of the prompt time (t₁, t₁'), so that the radio beacon (3) can match the duration (t₂, t₂') of the remaining part (7') of the radio communication (7) even more precisely to the available time.

4. Method according to claim 3, **characterised in that** the said prompt time information (15) is equal to an average duration (t_{com}) of the radio communication (7) minus the prompt time (t₁, t₁'),
which average duration (t_{com}) of the radio communication (7) is calculated by the onboard unit (2) from an averaged sum of prompt times (t₁, t₁') stored over multiple earlier radio communications (7) and durations (t₂, t₂') of the respective remaining parts (7') of these radio communications (7).

5. Method according to claim 3, **characterised in that** the said prompt time information (15) is equal to the prompt time (t₁, t₁').

6. Method according to claim 5, **characterised in that** the radio beacon (3) measures the speed (v) of an onboard unit (2) passing through radio coverage area (11), calculates an average duration (t_{com}) of the radio communication (7) approximatively from the measured speed (v) and the known length (L) of the radio coverage area (11), and matches the remaining part (7') of the radio communication (7) to the thus calculated average duration (t_{com}) minus the prompt time information (15).

7. Method according to one of claims 1 to 6, **characterised in that** the onboard unit (2) transmits the said operating mode information (13) with the optional prompt time information (15) at the beginning of the radio communication (7) as a first response (10) to the said signal (9).

8. Method according to claim 7, **characterised in that** the radio communication (7) between the radio beacon (3) and the transceiver (8) is conducted according to the DSRC standard, wherein the said operating mode information (13) is transmitted with the optional prompt time information (15) in the form of a vehicle service table message of the DSRC standard.

9. Method according to claim 7, **characterised in that** the radio communication (7) between the radio beacon (3) and the transceiver (8) is conducted according to the WAVE standard IEEE 1609.11.

10. Method according to one of claims 1 to 9, **characterised in that** during the course of the radio communication (7) traffic-relevant information such as registration number of the vehicle (6), toll tariffs (TOLL), toll maps (MAPS) or the like are exchanged in the form of data packages between the radio beacon (3) and the onboard unit (2).

11. Method according to one of claims 1 to 10, **characterised in that** the radio beacon (3) is carried by a movable carrier, preferably a control vehicle.

12. Onboard unit (2) with a transceiver (8) for radio communication (7) with radio beacons (3) of a road toll system (1), wherein the onboard unit (2) has two operating modes, i.e. a first energy-consuming working mode (ON) and a second energy-saving resting mode (STBY), and can be changed from the resting mode (STBY) to the working mode (ON) within a prompt time (t₁, t₁') by a signal (9) received by the radio beacon (3), **characterised in that** the onboard unit (2) is configured for transmitting as part of a radio communication (7) with a radio beacon (3) at least one information message (13) concerning its operating mode (STBY, ON), which prevailed before the receipt of the said signal (9), to the radio beacon (3), wherein the onboard unit (2) is capable of measuring the said prompt time (t₁, t₁') and transmitting an information message (15) dependent thereon to the radio beacon (3).

13. Onboard unit according to claim 12, **characterised in that** the said prompt time information (15) is equal to an average duration (t_{com}) of the radio communication (7) minus the prompt time (t₁, t₁'), wherein the onboard unit (2) is configured for storing the prompt times (t₁, t₁') and the durations (t₂, t₂') of the respectively remaining parts (7') of earlier radio communications (7) and averaging the said average duration (t_{com}) from these stored values.

14. Onboard unit according to claim 12, **characterised in that** the said prompt time information (15) is equal to the prompt time (t₁, t₁').

15. Onboard unit according to one of claims 12 to 14, **characterised in that** the onboard unit (2) transmits the said operating mode information (13) with the said prompt time information (15) at the beginning of the radio communication (7) as a first response (10) to the said signal (9).

16. Onboard unit according to claim 15, **characterised in that** the transceiver (8) is a DSRC transceiver and is configured for transmitting the said operating mode information (13) with the said prompt time information (15) in a vehicle service table message according to the DSRC standard.

17. Onboard unit according to claim 15, **characterised in that** the transceiver (8) is a WAVE transceiver according to standard IEEE 1609.11.

18. Onboard unit according to one of claims 12 to 17, **characterised in that** it is configured for the purpose of exchanging, during the course of the radio communication (7), traffic-relevant information such as registration number of the vehicle (6), toll tariffs (TOLL), toll maps (MAPS) or the like in the form of data packages between the radio beacon (3) and the onboard unit (2).

## Revendications

1. Procédé de communication radio (7) entre une balise radio (3) et un appareil de véhicule (2) doté d'un émetteur-récepteur (8) dans le cadre d'un système de péage routier (1), sachant que la balise radio (3) présente une zone de couverture radio limitée (11) et que l'appareil de véhicule (2) comporte deux états de fonctionnement, à savoir un premier mode de travail (ON) consommant de l'énergie et un deuxième mode de repos (STBY) économisant de l'énergie et peut être amené par un signal (9) reçu par la balise radio (3) à passer du mode de repos (STBY) au mode de travail (ON), **caractérisé par** les étapes :
recevoir un signal (9) dans l'appareil de véhicule (2), et ensuite amener l'appareil de véhicule (2) dans le mode de travail (ON), quand ce dernier se trouvait au préalable dans le mode de repos (STBY), en l'espace d'une durée de réveil (t₁ ; t₁') ;
envoyer un signal de réponse (10) par l'appareil de véhicule (2) à la balise radio (3), lequel signal de réponse contient au moins une information (13) relative à l'état de fonctionnement de l'appareil de véhicule (2) avant la réception dudit signal (9) ;
recevoir le signal de réponse (10) contenant ladite information (13) relative à l'état de fonctionnement dans la balise radio (3) et choisir par la balise radio (3) sur la base de l'information (13) relative à l'état de fonctionnement si la partie restante (7') de la communication radio (7) est à réaliser avec une durée plus longue (t₂') ou plus courte (t₂) avec l'appareil de véhicule (2) ; et
effectuer la partie restante (7') de la communication radio (7) avec la durée choisie (t₂, t₂').

2. Procédé selon la revendication 1, **caractérisé en ce que** dans le cas où l'information (13) relative à l'état de fonctionnement indique que l'appareil de véhicule (2) se trouvait au préalable dans le mode de repos (STBY), la durée la plus courte (t₂) est choisie et dans le cas où l'information (13) relative à l'état de fonctionnement indique que l'appareil de véhicule (2) se trouvait au préalable dans le mode de travail (ON), la durée la plus longue (t₂') est choisie.

3. Procédé selon la revendication 1 ou 2, **caractérisé en ce que** le signal de réponse (10) contient également une information (15) qui dépend de la durée de réveil (t₁, t₁'), pour que la balise radio (3) puisse adapter la durée (t₂, t₂') de la partie restante (7') de la communication radio (7) encore plus précisément au temps disponible.

4. Procédé selon la revendication 3, **caractérisé en ce que** ladite information (15) relative à la durée de réveil est identique à une durée moyenne (t_{com}) de la communication radio (7) moins la durée de réveil (t₁, t₁'),
ladite durée moyenne (t_{com}) de la communication radio (7) étant calculée par l'appareil de véhicule (2) à partir d'une somme moyenne des durées de réveil (t₁, t₁') mémorisées par l'intermédiaire de plusieurs communications radio (7) antérieures et des durées (t₂, t₂') des parties respectivement restantes (7') des communications radio (7).

5. Procédé selon la revendication 3, **caractérisé en ce que** ladite information relative à la durée de réveil (15) est identique à la durée de réveil (t₁, t₁').

6. Procédé selon la revendication 5, **caractérisé en ce que** la balise radio (3) mesure la vitesse (v) d'un appareil de véhicule (2) passant la zone de couverture radio (11), calcule une durée moyenne (t_{com}) de la communication radio (7) de manière approximative à partir de la vitesse (v) mesurée et de la longueur (L) connue au préalable de la zone de couverture radio (11) et adapte la partie restante (7') de la communication radio (7) à la durée moyenne (t_{com}) ainsi calculée moins l'information (15) relative à la durée de réveil.

7. Procédé selon l'une quelconque des revendications 1 à 6, **caractérisé en ce que** l'appareil de véhicule (2) envoie ladite information (13) relative à l'état de fonctionnement avec l'information (15) optionnelle relative à la durée de réveil au début de la communication radio (7) comme première réponse (10) audit signal (9).

8. Procédé selon la revendication 7, **caractérisé en ce que** la communication radio (7) entre la balise radio (3) et l'émetteur-récepteur (8) s'effectue selon la norme DSRC, sachant que ladite information (13) relative à l'état de fonctionnement est envoyée avec l'information (15) relative à la durée de réveil optionnelle sous la forme d'un message Vehicle Service Table de la norme DSRC.

9. Procédé selon la revendication 7, **caractérisé en ce que** la communication radio (7) s'effectue entre la balise radio (3) et l'émetteur-récepteur (8) selon la norme WAVE IEEE 1609.11.

10. Procédé selon l'une quelconque des revendications 1 à 9, **caractérisé en ce que** dans le cadre de la communication radio (7), des informations routières importantes telles que le numéro d'immatriculation du véhicule (6), des tarifs de péage (TOLL) ou des cartes de péage (MAPS) sont échangées sous la forme de paquets de données entre la balise radio (3) et l'appareil de véhicule (2).

11. Procédé selon l'une quelconque des revendications 1 à 10, **caractérisé en ce que** la balise radio (3) est embarquée par un support mobile, de préférence par un véhicule de contrôle.

12. Appareil de véhicule (2) comportant un émetteur-récepteur (8) aux fins de la communication radio (7) avec des balises radio (3) d'un système de péage routier (1), sachant que l'appareil de véhicule (2) comporte deux états de fonctionnement, à savoir un premier mode de travail (ON) consommant de l'énergie et un deuxième mode de repos (STBY) économisant de l'énergie et qu'il peut être amené à passer d'un mode de repos (STBY) à un mode de travail (ON) par un signal (9) reçu par une balise radio (3) en l'espace d'une durée de réveil (t₁, t₁'), **caractérisé en ce que** l'appareil de véhicule (2) est réalisé pour envoyer dans le cadre d'une communication radio (7) avec une balise radio (3) au moins une information (13) concernant son état de fonctionnement (STBY, ON) précédant la réception dudit signal (9) à la balise radio (3), sachant que l'appareil de véhicule (2) est apte à mesurer ladite durée de réveil (t₁, t₁') et à envoyer des informations (15) dépendant de cette dernière à la balise radio (3).

13. Appareil de véhicule selon la revendication 12, **caractérisé en ce que** ladite information (15) relative à la durée de réveil est identique à une durée moyenne (t_{com}) de la communication radio (7) moins la durée de réveil (t₁, t₁'), sachant que l'appareil de véhicule (2) est réalisé pour mémoriser les durées des réveil (t₁, t₁') et les durées (t₂, t₂') des parties respectivement restantes (7') des communications radio (7) antérieures et de faire la moyenne de ladite durée moyenne (t_{com}) à partir de ces valeurs mémorisées.

14. Appareil de véhicule selon la revendication 12, **caractérisé en ce que** ladite information (15) relative à la durée de réveil est identique à la durée de réveil (t₁, t₁').

15. Appareil de véhicule selon l'une quelconque des revendications 12 à 14, **caractérisé en ce que** l'appareil de véhicule (2) envoie ladite information (13) relative à l'état de fonctionnement avec ladite information (15) relative à la durée de réveil au début de la communication radio (7) comme première réponse (10) audit signal (9).

16. Appareil de véhicule selon la revendication 15, **caractérisé en ce que** l'émetteur-récepteur (8) est un émetteur-récepteur DSRC et est réalisé pour envoyer ladite information (13) relative à l'état de fonctionnement avec ladite information (15) relative à la durée de réveil dans un message Vehicle Service Table selon la norme DSRC.

17. Appareil de véhicule selon la revendication 15, **caractérisé en ce que** l'émetteur-récepteur (8) est un émetteur-récepteur WAVE selon la norme IEEE 1609.11.

18. Appareil de véhicule selon l'une quelconque des revendications 12 à 17, **caractérisé en ce qu'**il est réalisé pour échanger dans le cadre de la communication radio (7) des informations routières importantes telles que le numéro d'immatriculation du véhicule (6), des tarifs de péage (TOLL) ou des cartes de péage (MAPS) sous la forme de paquets de données entre la balise radio (3) et l'appareil de véhicule (2).
